# DEMANDE DE BREVET EUROPEEN

(11) **EP 0 943 463 A1**
(43) Date de publication de la demande: **22.09.1999**
(21) Numéro de dépôt: 98810236.4
(22) Date de dépôt: 19.03.1998
(51) Int. Cl.: B60B 37/10, A61G 5/10

(54) **Dispositif de fixation d'un moyeu de roue sur un châssis à l'aide d'un axe amovible, en particulier sur une chaise roulante**

(71) Demandeur: Edco Engineering S.A., 2108 Couvet (CH)
(72) Inventeur: Niedrig, Franklin, 8044 Zürich (CH)
(74) Mandataire: Ganguillet, Cyril

(57) **Abrégé**

Le poussoir de verrouillage 9 maintient les billes 11 en position saillante sous l'action du ressort 10 quand la position de verrouillage est atteinte. L'arbre 6 est alors bloqué par l'écrou 8 et les billes 11 entre le moyeu 1 et le montant 5. Le poussoir 9 et son capuchon 19 sont dans une position axiale telle que le liseré 22 monté sur le capuchon 19 est visible devant le flanc externe du moyeu 1.

## Description

La présente invention concerne un dispositif de fixation d'un moyeu de roue sur un châssis à l'aide d'un axe amovible, en particulier sur une chaise roulante.

Pour permettre le transport de certains véhicules démontables, comme les chaises roulantes, dans un coffre de voiture et réduire leur encombrement, les constructeurs prévoient souvent des axes amovibles, à verrouillage rapide, permettant le montage et le démontage des moyeux de roues.

Cependant lors du montage d'une ou plusieurs roues, il importe que l'utilisateur reçoive de manière perceptible une quittance de la fixation correcte de l'axe et du moyeu au châssis.

La présente invention a pour but d'améliorer la sécurité de fonctionnement de tels véhicules munis de moyeux à axes amovibles.

A cet effet, l'invention concerne un dispositif de fixation d'un moyeu de roue sur un châssis à l'aide d'un axe amovible, en particulier sur une chaise roulante, l'axe amovible traversant le moyeu et s'engageant dans une ouverture du châssis de façon à constituer un organe de fixation, un moyen de verrouillage prenant une position de verrouillage quand l'axe est engagé, ledit dispositif comportant un moyen de contrôle associé au moyen de verrouillage, ayant des états actif et inactif perceptibles, et prenant l'état actif quand le verrouillage est réalisé.

D'autres caractéristiques importantes de l'invention sont définies dans les revendications dépendantes.

Pour expliquer comment l'invention peut être réalisée, on décrit ci-après, à titre d'exemples, deux formes d'exécution du dispositif, en se référant au dessin annexé.
La figure 1 est une vue en coupe axiale partielle du dispositif de fixation selon la première forme d'exécution, dans une position partiellement engagée;
La figure 2 est une vue semblable du même dispositif dans la position de verrouillage;
La figure 3 est une vue agrandie de l'extrémité gauche du dispositif dans sa position représentée à la figure 2; et
La figure 4 une vue partielle semblable à la figure 2 du dispositif selon la seconde forme d'exécution.

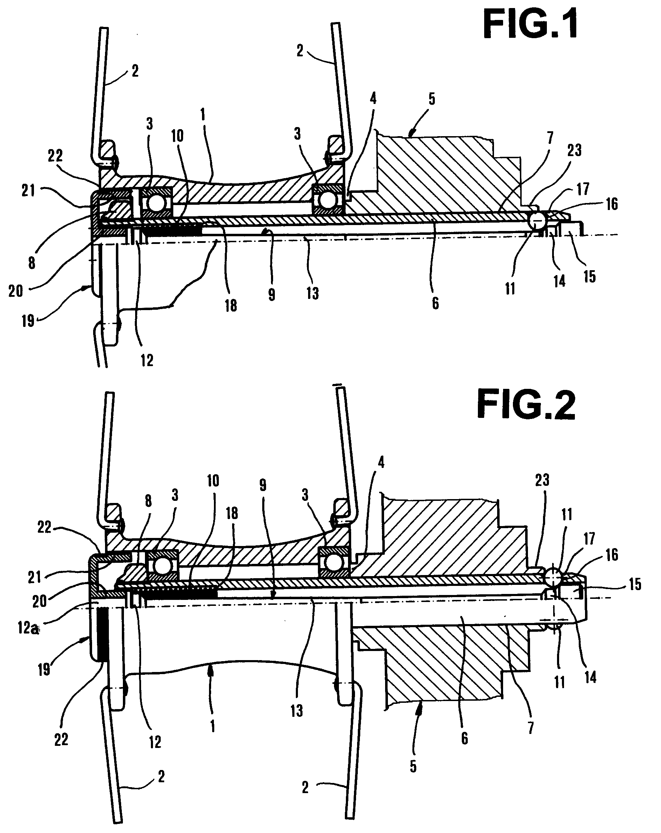

Le dispositif de verrouillage en soi, tel qu'il est représenté aux figure 1 à 4 est connu. Il suffira donc de le décrire brièvement. On voit au dessin un moyeu 1 d'une roue dont la jante (non représentée) est reliée au moyeu par des rayons 2. Des roulements à billes 3 logés dans un alésage du moyeu 1 assurent le pivotement de la roue en position de fixation. La bague de roulement intérieure du palier de droite à la figure 1 est alors en contact avec une collerette 4 d'un montant 5 faisant partie du châssis de la chaise roulante.

La pièce essentielle du dispositif de fixation est un arbre creux 6 ajusté aux bagues intérieures des roulements 3 et à une ouverture 7 ménagée à travers le montant 5 coaxialement à la collerette 4. A l'extrémité gauche de cet arbre est monté un écrou 8 dont l'ajustage permet de régler le fonctionnement du dispositif de fixation. Pour réaliser le montage, l'arbre 6 est engagé dans les paliers 3 et dans l'alésage 7 jusqu'à ce que la surface intérieure de l'écrou 8 soit appuyée contre la bague fixe du roulement 3 situé du côté extérieur du moyeu 1, et l'autre bague fixe appuyée contre la collerette 4. Les diamètres intérieurs des bagues et de l'alésage, et extérieur de l'arbre 6 sont ajustés de manière à permettre le coulissement libre des pièces.

Un moyen de verrouillage constitué par un poussoir 9 (représenté en vue sur les demi-coupes axiales des parties supérieures des figures 1 à 3), un ressort 10 et deux billes 11 peut alors être amené en position de verrouillage par pression axiale sur la tête 12 du poussoir 9. Ce dernier comporte une partie centrale 13 en forme de tige cylindrique et à son extrémité opposée à la tête 12, deux portées successives 14 et 15 avec des cônes de raccordement entre la tige et la première portée et entre les deux portées. Les billes 11 sont engagées dans des trous radiaux 16 de l'arbre tubulaire 6, leur éjection étant empêchée par une sertissure 17 sur chaque trou.

Le ressort 10 est armé entre le fond 18 d'une fraisure intérieure de l'arbre 6 et un épaulement conique reliant l'extrémité gauche (figure 1) de la tige 13 à la tête 12. Tant que les billes 11 se trouvent dans la position de la figure 1, c'est-à-dire en contact avec la tige 13 et la première rampe conique du poussoir 9, elles ne dépassent pas la surface extérieure de l'arbre 6 et ce dernier peut donc coulisser librement dans l'alésage 7.

Pour permettre un contrôle de l'engagement de l'arbre 6, la tête 12 du poussoir 9 est équipée d'un capuchon 19 dont le tube central 20 est fixé sur l'extrémité 12a de la tête cylindrique 12 et dont le flanc 21 s'engage entre l'écrou 8 et la partie extérieure de l'alésage du moyeu 1. Un liseré de couleur 22 est engagé dans une gorge annulaire qui fait le tour du capuchon 19 à sa limite extérieure. Dans l'exemple des figures 1 à 3, le tube central 20 est vissé sur l'extrémité 12a du poussoir 9. Il peut aussi être chassé.

Une comparaison entre les figure 1 et 2 montre comment fonctionne le moyen de contrôle constitué ici du capuchon 19 avec le liseré 22 et de la face externe du moyeu 1 de la roue. Dans la position de la figure 1 le moyeu 1 est en place par rapport au montant 5 du châssis puisque la bague fixe du roulement 3 de droite est en appui contre la collerette 4, mais l'arbre 6 n'a pas été suffisamment engagé et l'écrou 8 est encore à une certaine distance de la bague fixe du roulement 3 de gauche. Les billes Il sont retenues dans l'alésage 7 par la collerette 23 qui est solidaire du montant 5. Le ressort 10 ne peut pas se détendre, même si on cesse la pression sur le poussoir 9. Or le liseré 22 est masqué par le flanc gauche du moyeu 1. Le moyen de contrôle est dans son état inactif.

En revanche la figure 2 montre la situation quand la position correcte a été atteinte: Quand l'écrou 8 aussi bien que la collerette 4 du montant 5 sont en contact chacun avec la bague fixe de l'un des roulements, les trous 16 apparaissent à l'extérieur de la collerette 23. Le ressort 10 pousse les billes 11 en position saillante ce qui verrouille le dispositif de fixation. La quittance de cette opération apparaît par le fait que le liseré 22 devient visible devant le flanc du moyeu 1 de la roue.

Pour libérer le dispositif et démonter la roue, il suffit d'appuyer sur le capuchon 19.

Il serait aussi possible, en variante, de prévoir un moyen de contrôle visuel semblable au liseré 22 sur l'arbre 6 et/ou le poussoir 9 du côté du montant 5. Le repérage visuel formant le moyen de contrôle pourrait aussi montrer de manière perceptible si les billes 11 ont effectivement atteint la position saillante.

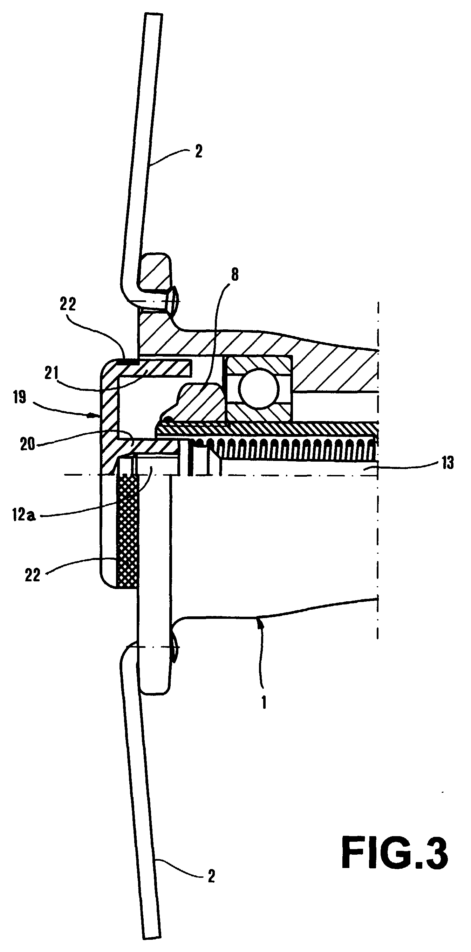

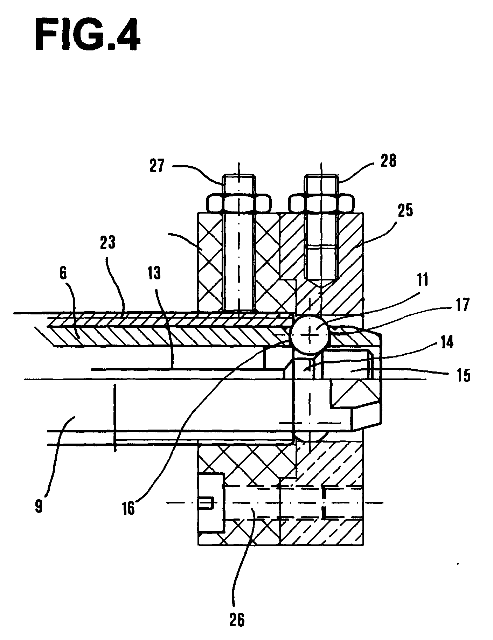

La figure 4 montre encore une autre solution au problème de la réalisation d'un moyen de contrôle simple et efficace: On reconnaît à la figure 3 la partie extrême droite du poussoir 9 avec les portées 15, 14 et la tige 13, les billes 11, le sertissage 17 et l'arbre creux 6. Le montant 5 présente ici une collerette tubulaire prolongée 23, qui est filetée extérieurement. Une bague en matière isolante 24, vissée sur cette collerette, porte une bague conductrice 25 dont la surface d'alésage a un diamètre correspondant à celui que les billes 11 atteignent quand elles sont en position saillante. Les vis 26 assurent la fixation des bagues 24 et 25 l'une à l'autre. Des bornes 27 et 28 permettent de relier le système 23/11/25 à un circuit électrique comportant un avertisseur. Ainsi les billes 11 et la bague 25 forment un contacteur qui reste ouvert tant que la position de verrouillage n'a pas été réalisée de manière correcte, mais se ferme quand les billes sont en position saillante. L'avertisseur peut comporter un émetteur de signal optique, acoustique ou tactile par exemple. Il peut être de type électrique ou électronique. Il peut fonctionner par défaut, la fermeture du contacteur produisant l'extinction du signal, ou être temporisé de manière à s'éteindre automatiquement au bout d'un certain temps.

On se rend compte que la présence du moyen de contrôle décrit sur un dispositif de fixation amovible permettant d'enlever et remettre en place facilement une ou des roues d'un véhicule tel qu'une chaise roulante est un facteur de sécurité très efficace.

## Revendications

1. Dispositif de fixation d'un moyeu (1) de roue sur un châssis (5) à l'aide d'un axe amovible (6), en particulier sur une chaise roulante, l'axe amovible traversant le moyeu et s'engageant dans une ouverture (7) du châssis de façon à constituer un organe de fixation, un moyen de verrouillage (11) prenant une position de verrouillage quand l'axe est engagé, caractérisé en ce qu'il comporte un moyen de contrôle (22) associé au moyen de verrouillage, ayant des états actif et inactif perceptibles, et prenant l'état actif quand le verrouillage est réalisé.

2. Dispositif selon la revendication 1, dans lequel l'axe, amovible (6) porte les paliers (3) du moyeu (1) d'une roue de la chaise, l'organe de fixation est formé par une extrémité de cet axe, et le moyen de verrouillage est formé par un poussoir (9) à ressort (10) comportant une tige (13), mobile axialement dans un alésage de l'axe et commandant des billes (11) maintenues en saillie de l'axe, dans la position de verrouillage, caractérisé en ce que le moyen de contrôle est associé au moyen de verrouillage de manière que ses états actif et inactif soient fonction des positions axiales du poussoir et de l'axe par rapport au châssis, l'état actif étant réalisé quand les billes sont en position saillante.

3. Dispositif selon la revendication 2, caractérisé en ce que le moyen de contrôle comporte un organe (19) solidaire du poussoir (9) de verrouillage, muni d'un repère (22), et un masque ayant une position axiale déterminée par rapport au châssis quand le dispositif est en position de verrouillage, le repère étant alors visible devant le masque.

4. Dispositif selon la revendication 3, caractérisé en ce que l'organe de contrôle muni du repère est fixé sur le poussoir, à une extrémité de la tige opposée aux billes, le masque étant formé par le pourtour du moyeu de la roue.

5. Dispositif selon la revendication 2, caractérisé en ce que le moyen de contrôle est un détecteur muni d'un avertisseur, monté sur le châssis et coopérant avec au moins une des billes de manière à prendre l'état actif quand la ou les billes (11) sont en position saillante.

6. Dispositif selon la revendication 5, caractérisé en ce que le détecteur comporte un circuit électrique dont un composant est un contacteur avec un élément de contact fixe solidaire du châssis et un élément de contact mobile constitué par une des billes, ce contacteur étant fermé quand le dispositif est en position de verrouillage correct.

7. Dispositif selon la revendication 5, caractérisé en ce que l'avertisseur est un émetteur de signal acoustique, optique ou tactile.
